# EUROPEAN PATENT SPECIFICATION

(11) **EP 2 139 578 B1**
(45) Date of publication and mention of the grant of the patent: **25.12.2013**
(21) Application number: 08744374.3
(22) Date of filing: 26.03.2008
(51) Int. Cl.: B01D 27/08, B01D 35/30

(54) **SPIN-ON FILTER CARTRIDGE**
SPIN-ON-FILTERKARTUSCHE
CARTOUCHE DE FILTRE A VISSER

(30) Priority: 26.03.2007 US 908056 P
(43) Date of publication of application: 06.01.2010
(73) Proprietor: Parker-Hannifin Corporation, Cleveland, Ohio 44124-4141 (US)
(72) Inventor: JENSEN, Russell, D., Modesto, CA 95356 (US)
(74) Representative: Belcher, Simon James
(86) International application number: PCT/US2008/058226
(87) International publication number: WO 2008/118939

(56) References cited:
- WO-A1-99/04879
- CA-A1- 2 486 301
- DE-A1- 19 948 767
- US-A- 4 052 307
- US-A1- 2001 037 971
- US-A1- 2005 023 226
- US-B1- 6 355 169

## Description

A filter can be a sometimes small, but usually crucial, item in a fluid system. In a fuel-delivery system, for example, this item filters the fuel upstream of the engine to avoid the ill effects of water and/or contamination. An often preferred filter construction incorporates a "spin-on" filter cartridge that can be easily installed in tight spaces (e.g., a crowded engine compartment). With spin-on installation, connections are made, and seals are formed, by the simple act of spinning the filter cartridge onto a threaded mounting stud.

US-4052307 relates to a universal filter mounting attachment. A base carries a latch which cooperates with a corresponding structure on the filter to latch the filter to the base. The base includes an adaptor-cartridge internal seal and an inter-chamber seal.

### SUMMARY

According to the present invention, there is provided a filter assembly as defined in appended claim 1. Other aspects of the invention also provide a spin-on filter cartridge as defined in appended claim 13, and a method of assembling the filter assembly, as defined in appended claim 14.

A filter cartridge is provided that allows spin-on installation without the use of threaded cartridge components. The cartridge comprises a cannister, a filter element, and adaptor-mounting plate that allows non-threaded engagement during spin-on installation. In this manner, the cartridge can have a simple construction that is inexpensive to manufacture.

### DRAWINGS

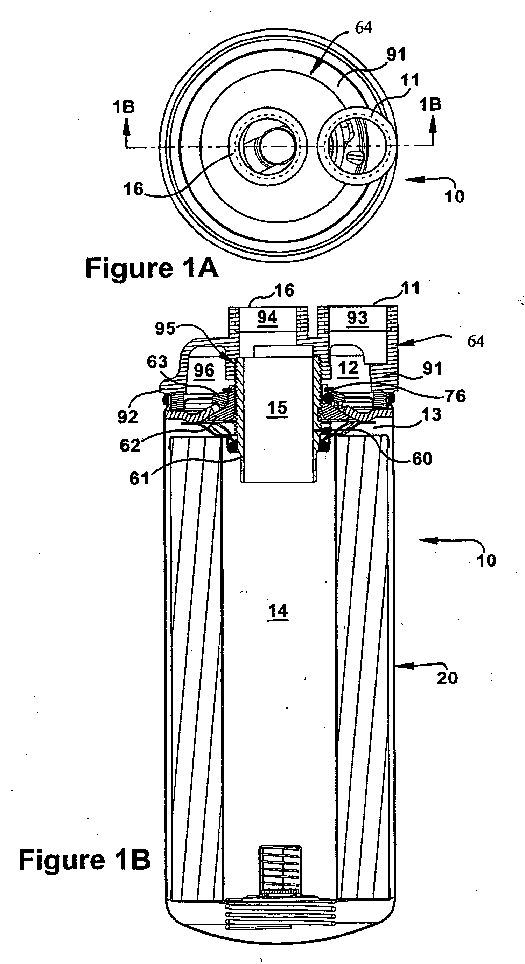

Figures 1A - 1B (1st drawing set) are top and sectional views of a filter 10 comprising a filter cartridge 20, and an adaptor 60.

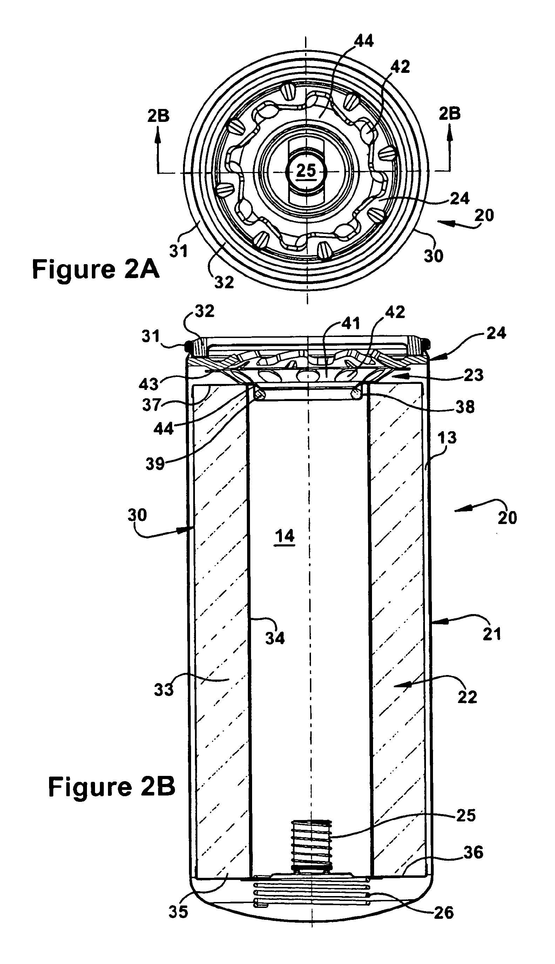

Figures 2A - 2B (2nd drawing set) are perspective, top, and sectional views of the filter cartridge 20.

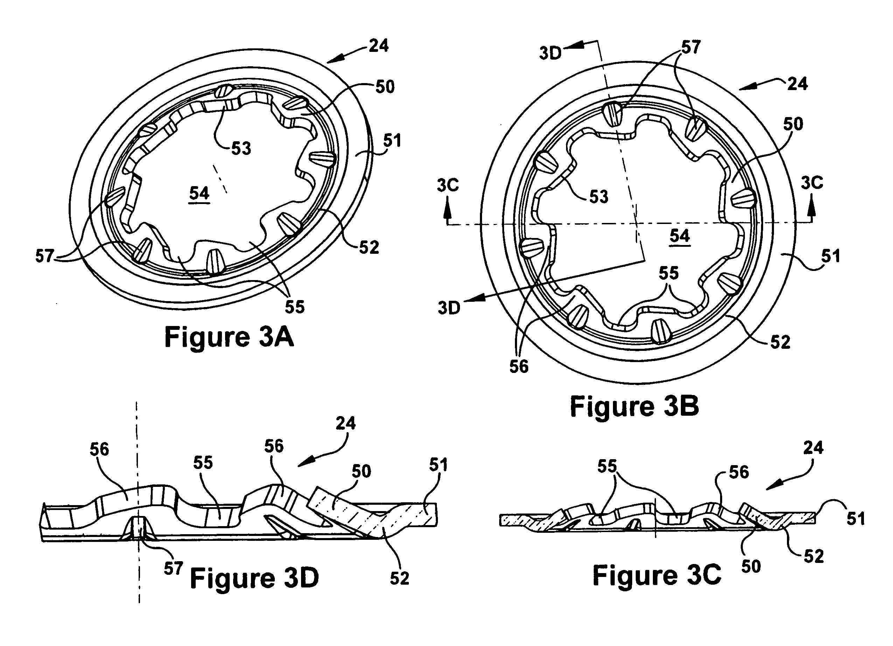

Figures 3A - 3D (3rd drawing set) are perspective, top, and sectional views of the cartridge's adaptor-mounting plate 24.

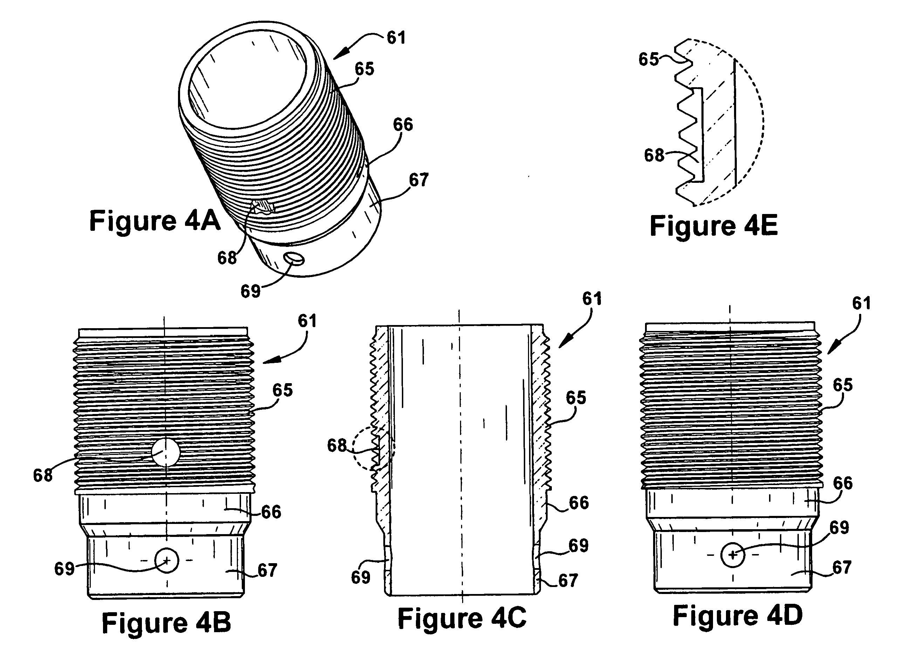

Figures 4A - 4E (4th drawing set) are perspective, side, sectional, rear, and close-up views of the adaptor's mounting stud 61.

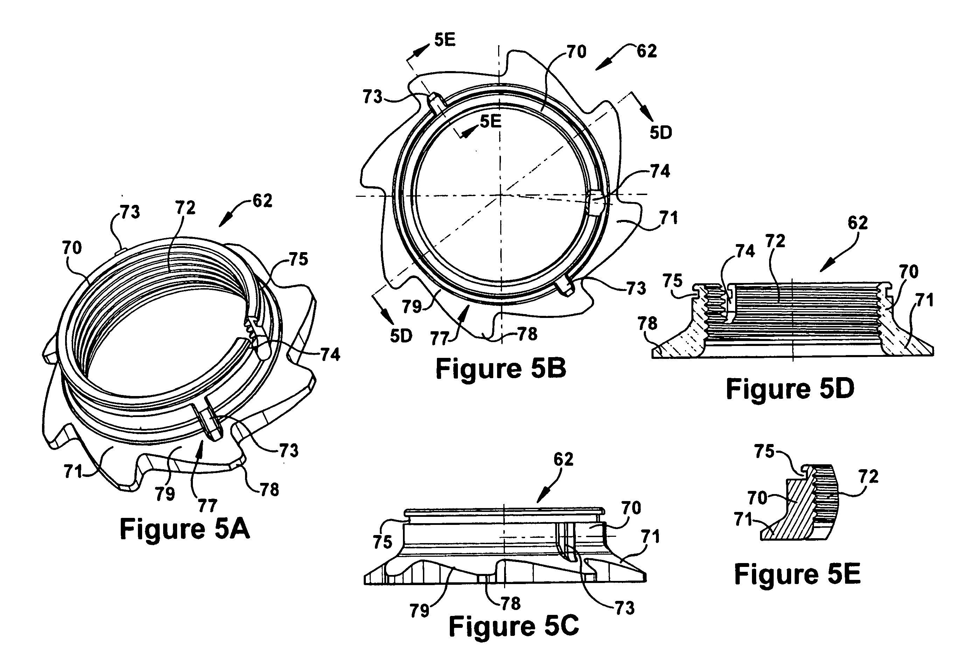

Figures 5A - 5E (5th drawing set) are perspective, top, side, sectional, and close-up views of the adaptor's carrier 62.

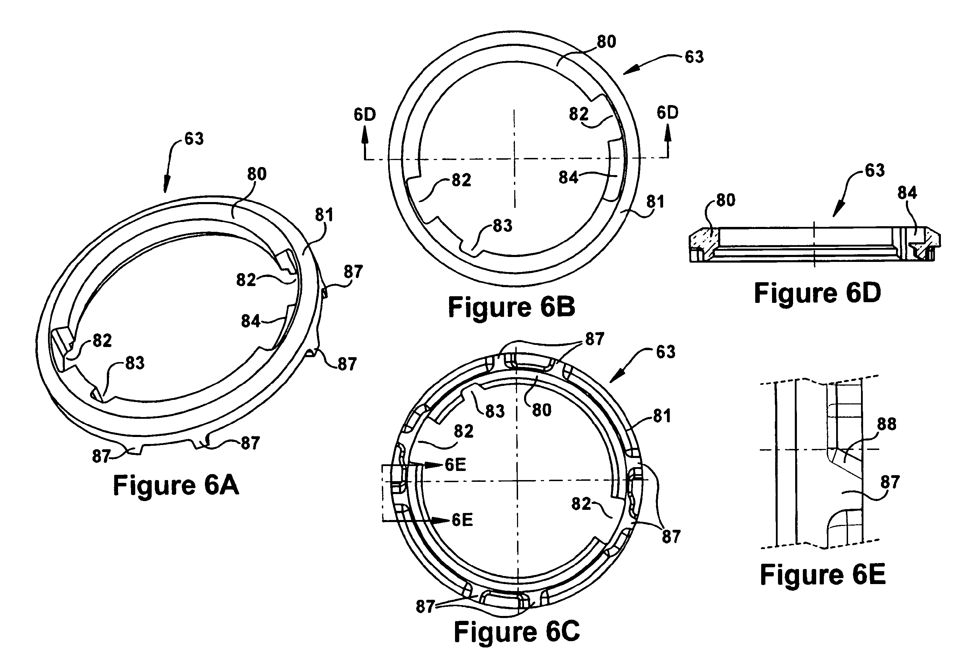

Figures 6A - 6E (6th drawing set) are perspective, top, bottom, sectional, and close-up views of the adaptor's latcher 63.

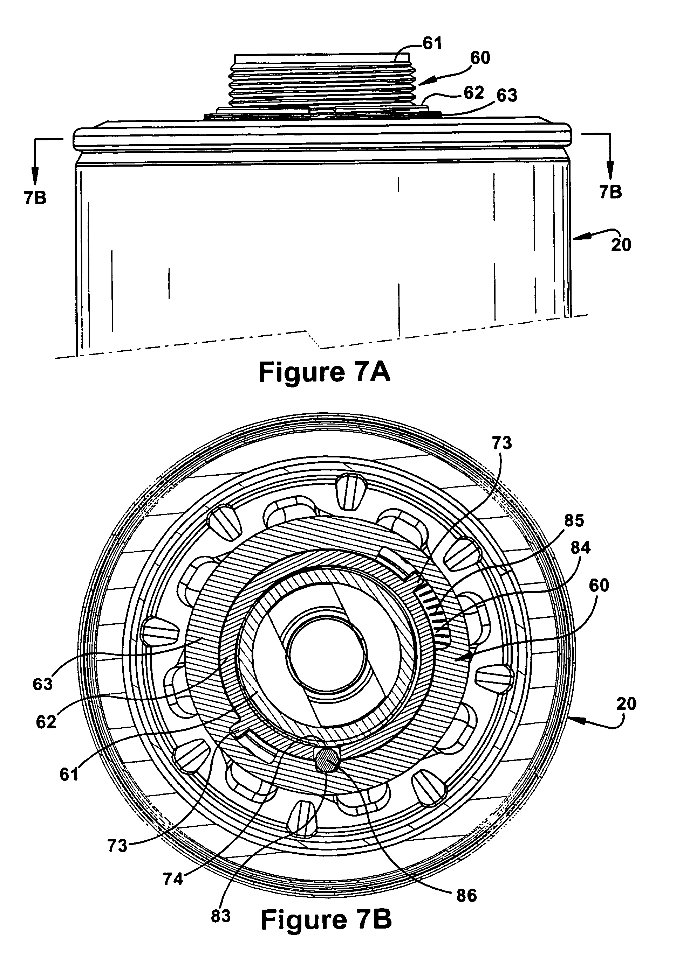

Figures 7A - 7B (7^{th} drawing set) are side and sectional views of the filter cartridge 20 and the adaptor 60, the adaptor 60 being shown in a stud-carrier-unlatched condition.

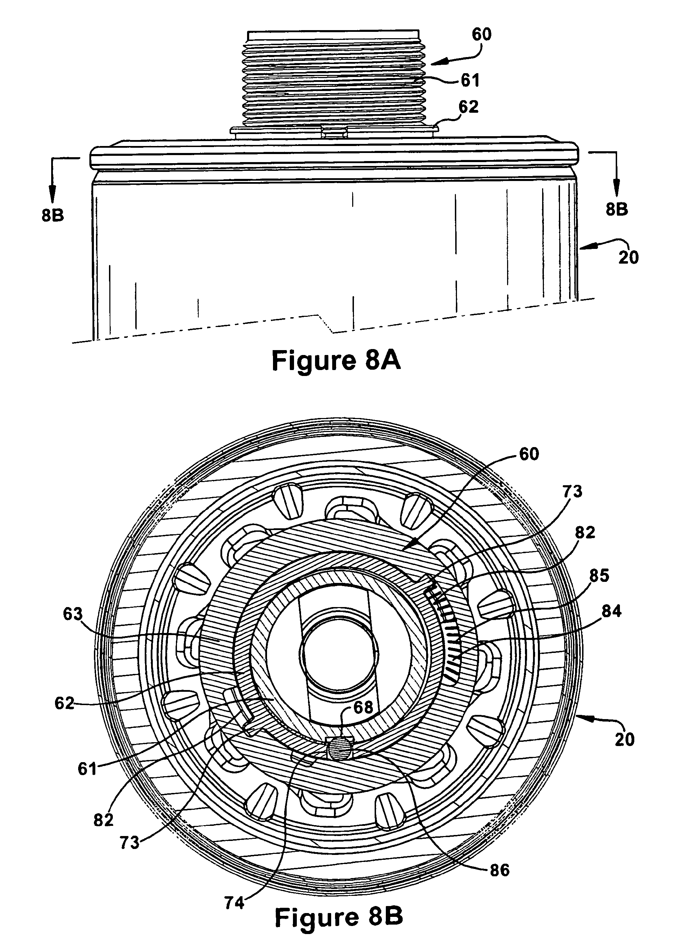

Figures 8A - 8B (8^{th} drawing set) are side and sectional views of the filter cartridge 20 and the adaptor 60, the adaptor 60 being shown in a stud-carrier-latched condition.

### DESCRIPTION

Referring now to the drawings, and initially to the 1^{st} drawing set, a filter 10 is shown. In operation, the to-be-filtered fluid enters the filter 10 through an inlet port 11. The fluid then travels through inlet chambers 12 and 13 to the filtering media (i.e., filter media 33, introduced below) whereat it is filtered. The filtered fluid travels through outlet chambers 14 and 15, and exits the filter 10 through an outlet port 16.

### Filter Cartridge 20

The filter 10 comprises a filter cartridge 20 (2^{nd} drawing set). The filter cartridge 20 comprises a cannister 21, a filter element 22, a filter cap 23, an adaptor-mounting plate 24, and loading springs 25 and 26.

The cannister 21 comprises a cylindrical shell 30 with an open end and an opposite closed end. The shell 30 an be constructed, for example, of drawn metal (e.g., steel) and/or it can be formed in one-piece. A rim 31 surrounds the cannister's open end and it is shaped to receive a seal 32 (e.g., an elastomeric seal). In the assembled filter 10, the seal 32 seals the interface between the cannister 21 and another component of the filter 10 (namely an adaptor hood 64, introduced below). In smaller sized filters, for example, the cannister's diameter can be in the range of about 10 cm to about 15 cm, and its length can be in the range of about 20 cm to about 40 cm.

The filter element 22 comprises a filter media 33 which can be a cylindrical compilation of longitudinal pleats. The inlet chamber 13 is located outside the pleats' radially outer peaks and the outlet chamber 14 is located inside the pleats' radially inner peaks. The pleat count can be, for example, between about 60 and 80 (e.g., approximately 70), and the filter efficiency can be at least 80% (e.g. 90%) for 20 micron and larger.

The filter element 22 can (but need not) include a center tube 34. The floor 35 of the filter element 22 seals the annular face of the filter media 33 and closes this end of the inner chamber 14. The floor 35 can also include a platform 36 for the loading spring 26 and/or the loading spring 27. The ceiling 37 of the filter element 22 seals the corresponding annular face of the filter media 33, and forms a gutter 38 extending into the inner chamber 14. The gutter 38 holds a seal 39 (e.g., an elastomeric seal).

The illustrated filter cap 23 comprises a canopy portion 41 (with windows 42), a ledge portion 43 and a flange portion 44. These portion 41, 43, 44 surround an open central area. The canopy portion 41 flares outward towards the cannister's open end. The windows 42 form flow passageways from inside the cap 23 (the central open central area) to outside the cap 23 (the inlet chamber 13).

The cap's ledge portion 43 extends radially outward from the upper edge of the canopy portion 41. The capture-flange portion 42 extends radially inward from the canopy's lower edge. The portion 43 forms a ledge for a portion of the adaptor-mounting plate 24 (namely an elbow portion 52 introduced below) and the flange portion 42 captures the seal 39 within the gutter 38.

The adaptor-mounting plate 24 (3^{rd} drawing set) comprises a skirt portion 50 that slopes toward the cannister's open end. A brim portion 51 forms the plate's outer periphery and an elbow portion 52 connects the skirt portion 50 and the brim portion 51. In the assembled cartridge 20, the brim portion 51 seats against the cannister's rim 31 and the elbow portion 52 rests upon the cap's ledge portion 43.

The inner perimeter 53 of the skirt portion 50 forms a central opening 54. The perimeter 53 follows a non-circular path comprising scoop sections 55 and ramp sections 56 bridging adjacent scoop sections. The mounting plate 24 can include at least four scoop-ramp sections 55-56, at least six scoop-ramp sections 55-56, and/or at least eight scoop-ramp sections 55-56. The illustrated plate 24 comprises eight scoop-ramp sections 55-56, with the ramp sections 56 sloping in the clockwise direction. Some or all of the ramp sections 56 can be provided with stiffening ribs 57.

The loading springs 25 and 26 (2nd drawing set) bias the filter element 22 upward. This biasing seats the gutter-held seal 39 against the cap's seal- pressing portion 44, holds the cap's ledge portion 43 against the elbow portion 52 of the adaptor-mounting plate 24, and pushes the plate's brim portion 51 against the cannister's gutter 38.

### Adaptor 60

The filter 10 also comprises an adaptor 60 (1st, 3rd, 4th, 5th, and 6th drawing sets) and a hood 64. The adaptor 60 comprises a mounting stud 61, a carrier 62, and a latcher 63. The mounting stud 61 is the stud onto which the filter cartridge 20 is "spun" for installation. The carrier 62 attaches to the filter cartridge 20 and "carries" it during this spinning.

The latcher 63 allows the adaptor 60 to convert between a stud-carrier- unlatched condition (1st and 7th drawing sets) and a stud-carrier-latched condition (8th drawing set). In the unlatched condition, the carrier 62 rotates with the latcher 63 and the being-spun filter cartridge 20. In the latched condition, the carrier 62 remains stationary with the mounting stud 61 and the latcher 63 can rotate relative to the carrier 62.

The mounting stud 61 (4th drawing set) comprises portions 65, 66, and 67, which together form a passageway from the chamber 14 to the chamber 15. The portion 65 has external threads which mate with internal threads on the carrier 62. The portion 66 provides a seat for the seal 39 carried by the cannister gutter 38 and captured by the cap portion 42. And the portion 67 forms the stud's insertion head when mounting the adaptor 60 to the cartridge 20. The thread portion 65 has a pocket 68 and the neck portion 67 can be provided with holes 69.

The carrier 62 (5th drawing set) comprises a stem portion 70 and a skirt portion 71. The stem portion 70 has internal threads 72, radially projecting tabs 73, and a slot 74. The tabs 73 are spaced 180° apart and the slot 74 is spaced from the closest tab about 35° in the counterclockwise direction. A retainer groove 75 is situated near the distal end of the stem portion 70, and retainer 76 is positioned therein (1^{st} drawing set).

The carrier's skirt portion 71 includes a plurality of blade-like elements 77 that project from the stem portion 70 in a pinwheel manner. The illustrated elements 77 each have a shark-fin shape with a flattened tip section 78 and a ramp section 79 leading thereto. The ramp sections 79 each incline in the counterclockwise direction towards its corresponding tip section 78. The ramp thickness decreases in the counterclockwise direction towards the connected tip section 78. And the opposite side of each tip section 78 increases in thickness towards the succeeding ramp section 79.

The latcher 63 (6^{th} drawing set) has an inner ring portion 80 and an outer border portion 81. The ring portion 80 has an annular shape with flat axial faces. Slots 82, a pocket 83, and a ledge 84 are formed in the ring portion 80. The slots 82 and the pocket 83 extend completely through the ring thickness, the ledge 84 extends only partially therethrough. The slots 82 and the ledge 84 extend entirely through the ring width, the pocket 83 does not. The slots 82 are radially spaced about180° apart and the ledge 84 is radially coextensive (in the clockwise direction) with one of the slots 82. The pocket 83 is radially spaced from the ledgeless slot 82 (from its clockwise edge) about 15° to about 40° in the counterclockwise direction. A spring 85 is situated in the ledge 84 and biases the adaptor 60 its stud-carrier-latched condition (8^{th} drawing set). When the adaptor 60 is in its stud-carrier-unlatched condition, a ball 86 is situated in the pocket 83 (7^{th} drawing set).

The latcher's border portion 81 has a tapered upper face and a flat lower face, with stub-like legs 87 projecting downward from the lower face. The legs 87 are grouped in pairs, with four pairs of legs 87 being equally spaced around the border's circumference. The spacing between the two legs 87 in each pair corresponds to an intermediate width of the ramp sections 53 in the adaptor-mounting plate 24. The non-facing sides 88 of the grouped-in-pair legs 87 (i.e., the outer faces of each leg pair) are inclined downward.

In the assembled adaptor 60 (1^{st}, 7^{th} and 8^{th} drawing sets), the mounting stud 61 is positioned within the carrier 62 and the latcher 63 is positioned around the carrier 62. The carrier's stem portion 70 is screwed onto the stud's thread portion 65. The latcher 63 is slipped around the carrier's stem portion 70 and the retainer 76 holds the parts together. The carrier tabs 73 are situated for sliding movement in the latcher slots 82.

When the adaptor 60 is in its stud-carrier-unlatched condition (7^{th} drawing set), the ball 86 is trapped in the compartment formed by the carrier pocket 74 and the latcher pocket 83. The carrier tabs 73 are abutted against the clockwise side of the latcher slots 82 and the spring 85 is compressed onto the latcher ledge 84. In this condition, the mounting stud 61 can rotate relative to the carrier 62.

When the adaptor 60 is in its stud-carrier-latched condition (8^{th} drawing set), the locking ball 86 is trapped in the compartment formed by the stud pocket 68 and the carrier pocket 74. The carrier tabs 73 are abutted against the counterclockwise side of the latcher slots 82 and the spring 85 extends across the latcher ledge 84 and the adjacent latcher slot 82. In this condition, the carrier 62 remains stationary with the mounting stud 61 and the latcher 63 can rotate relative to the carrier 62.

The port-providing hood 64 (1^{st} drawing set) can include a dome-like wall 91 with a rim 92, an inlet passage 93, an outlet passage 94, and a stud-connecting passage 95. The open ends of the passages 93 and 94 form the inlet and outlet ports 11 and 16, respectively. These port-forming ends of the passages 93 and 94 can be threaded or otherwise constructed for connection to inlet/outlet fluid lines in the overall fluid system (e.g., a fuel-delivery system).

The inlet passage 93 leads from the inlet port 11 to an annular space 96 surrounding the passage 95. The passage 93 and this space 96 form the inlet chamber 12. The passage 95 leads into the outlet passage 94 which forms, and leads to, the outlet port 16. The hood's passages 94 and 95, along with the hollow interior of the mounting stud 61, form the outlet chamber 15.

The passage 95 has internal threads that mate with external threads on the stud portion 65. In the assembled filter 10, the hood's rim 92 seats against the cannister-rim seal 32, thereby preventing fluid leakage from the inlet chamber 12 at the cannister-hood interface.

### Cartridge-Adaptor Assembly

In the fluid system, the mounting stud 61 and the hood 64 are stationarily mounted relative to the system and they do not rotate relative to the mounting platform surface (e.g., a wall in the engine compartment) or each other. The carrier 62 and the latcher 63 remain assembled to the mounting stud 61 and or not removed/replaced with the cartridge filter 20.

Prior to assembly of the filter cartridge 20, the adaptor 60 is in its stud-carrier-latched condition (8^{th} drawing set), thanks to the biasing spring 85 in the latcher 63. In the latched condition, the ball 86 is in the compartment formed by the stud pocket 68 and the carrier pocket 74. The carrier 62 rotates relative to the stud 61, and the carrier 62 and the latcher 63 rotate together.

To install the filter cartridge 20 onto the adaptor 60, the stud 61 is inserted into the cannister 21 and into the inner chamber 14. The stud's neck portion 67 can be temporarily aligned with the seal 39 to insure that the cartridge 20 is not tilted relative to the adaptor 60.

The filter cartridge 20 is then rotated (i.e., "spun") relative to the mounting stud 61. During this rotation, the carrier's skirt portion 71 slips underneath the skirt portion 50 of the adaptor-mounting plate 24. Particularly, the shark-fin-shape elements 77 pass through the plate's inner perimeter 53. More particularly, the tip sections 78 pass through the plate's scoop sections 55 and the ramp sections 56 follow. The upward tilt of the plate's ramp sections 56 and their counterclockwise ramp direction, along with the sloping thickness of the carrier's ramp sections 79 and their clockwise ramp direction, facilitates this insertion.

Rotation of the latcher 63 relative to the carrier 62 results in the ball 86 moving from the carrier-latcher compartment (the compartment formed by the stud pocket 68 and the carrier pocket 74) to the compartment formed by the carrier pocket 74 and the latcher pocket 83. The adaptor 60 is thereby converted to its stud-carrier-unlatched condition, In this condition, the carrier 62 and the latcher 63 can rotate relative to the stud 61.

In the latched condition, the latcher's legs 87 straddle ramp sections 56 of the adaptor-mounting plate 24. Further "spinning" of the filter cartridge 20 results in rotation of the latcher 63, but not the carrier 62. The filter cartridge 20, the carrier 62, and the latcher 63, continue up the thread the stud 61 until the seal 32 is tightly seated (between the cannister rim 31 and the hood rim 92) and the seal 39 is tightly seated (against the gutter 38, the cap flange 44, and the stud portion 66.

In the assembled filter 10, the to-be-filtered fluid enters the inlet port 11, passes into the inlet chamber 12 (formed by the hood passage 93 and the annular space 96), through the scoop sections 55 of the adaptor-mounting plate 24, through the windows 42 of the filter cap 23, and into the inlet chamber 13 (between the cannister 20 and the outer surface of the filter media 33). The fluid then travels radially inward and is filtered by the media 33. The filtered fluid flows from the outlet chamber 14 through the mounting stud 61 into the outlet chamber 15 (formed by the hood passages 94 and 95) and exits through the outlet port 16.

### Closing

One may now appreciate that the filter cartridge 20 can be constructed without a threaded component for adaptor-mounting purposes, and still allow spin-on installation with a threaded mounting stud.

Although the filter 10, the filter cartridge 20, the adaptor-mounting plate 24, the adaptor 60, and/or the hood 64, have been shown and described with respect to a certain embodiment, equivalent alterations and modifications will occur to others skilled in the art upon the reading/understanding of this specification and the annexed drawings. For example, instead of the fluid flowing radially inward, as described, it could instead flow radially outward (in which case the ports 11/16, the chambers 12/15, the chambers 13/14, and the passages 93/94 would switch inlet-outlet assignments).

In regard to the various functions performed by the above described elements (*e.g*., components, assemblies, systems, devices, compositions, etc.), the terms (including a reference to a "means") used to describe such elements are intended to correspond, unless otherwise indicated, to any element which performs the specified function of the described element (*i.e*., that is functionally equivalent), even though not structurally equivalent to the disclosed structure which performs the function. In addition, while a particular feature of the invention may have been described above with respect to only one or more of several illustrated embodiments, such feature may be combined with one or more other features of the other embodiments, as may be desired and advantageous for any given or particular application. If incorporated-by-reference subject matter is inconsistent with subject matter expressly set forth in the written specification (and/or drawings) of the present disclosure, the latter governs to the extent necessary to eliminate indefiniteness and/or clarity-lacking issues. Unless otherwise indicated, direction modifiers (*e.g*., upward, downward, top, bottom, upper, lower, floor, ceiling, etc.) are used only for ease in explanation, and do not limit components to any particular orientation.

## Claims

1. A filter assembly comprising a hood (64), an adaptor (60) and a spin-on filter cartridge (20), in which the hood (64) is stationarily mounted on a mounting platform surface, the adaptor (60) comprises:
a mounting stud (61) on to which the filter cartridge (20) is spun for installation, the mounting stud (61) being stationarily mounted to the mounting platform surface,
a carrier (62) which attaches to the filter cartridge (20) and carries it during initial phases of spinning, the carrier (62) having a stem portion (70) and a skirt portion (71) including a plurality of blade-like elements (77), and
a latcher (63) which allows the adaptor (60) to convert between a condition in which the carrier (62) rotates relative to a mounting stud (61), and a condition in which the carrier (62) remains stationary relative to the mounting stud (61),
wherein the mounting stud (61) is positioned within the carrier (62) and the latcher (63) is positioned around the carrier (62),
and in which the filter cartridge (20) comprises:
a canister (21) having an open end, a rim (31) surrounding this open end, and a seal (32) positioned in the rim (31) for sealing an interface between the cartridge (20) and the hood (64),
a filter element (22) positioned within the canister (21), defining an outer chamber (13) outside the filter element (22) and having an inner chamber (14) inside the filter element (22), and a seal (39) that seals an interface between the outer chamber and the inner chamber when seated against the mounting stud (61), and
an adaptor-mounting plate (24) positioned within the canister (21) between its open end and the filter element (22),
in which the adaptor-mounting plate (24) comprises a skirt portion (50) forming an inner perimeter (53) defining a non-threaded central opening (54) and following a non-circular path, the plurality of blade-like elements (77) of the carrier's skirt portion (71) slipping underneath the plate's skirt portion (50) during rotation of the filter cartridge (20) relative to the mounting stud (61).

2. A filter assembly as claimed in claim 1, in which the plurality of blade-like elements (77) project from the stem portion (70) in a pinwheel manner, and in which the number of blade-like elements (77) is the same as the number of scoop sections (55) in the adaptor-mounting plate (24).

3. A filter assembly as claimed in claim 2, in which the adaptor (60) includes a port-defining hood (64).

4. A filter assembly as claimed in claim 1, in which the inner perimeter (53) has at least four scoop sections (55) and four ramp sections (56) between them, and preferably has eight scoop sections (55) and eight ramp sections (56).

5. A filter assembly as claimed in claim 4, in which the skirt portion (50) slopes towards the open end of the canister (21).

6. A filter assembly as claimed in claim 5, in which the adaptor-mounting plate (24) comprises a brim portion (51) that forms the plate's outer periphery.

7. A filter assembly as claimed in claim 6, in which the brim portion (51) seats against the rim (31) of the cannister (21).

8. A filter assembly as claimed in claim 7, in which the adaptor-mounting plate (24) comprises an elbow portion (52) that connects the skirt portion (50) and the brim portion (51), and in which the elbow portion (52) rests on a ledge portion (43) of a filter cap (23).

9. A filter assembly as claimed in claim 1, in which at least one of the seals (32, 39) is made of an elastomeric material.

10. A filter assembly as claimed in claim 1, in which the filter element (22) includes a floor (35) sealing a face of the filter media (33) and a spring (25, 26) for biassing the filter element (22) towards the open end of the cannister (21), in which the floor (35) includes a platform for the spring, in which the spring(s) (25, 26) bias the adaptor-mounting plate (24) towards the open end of the cannister (21).

11. A filter assembly as claimed in claim 1, in which the filter element includes a ceiling (37) for sealing a face of the filter media (33) and forming a gutter (38) extending into the inner chamber (14), in which the gutter (38) holds the seal (39) that seals the interface between outer chamber (13) and the inner chamber (14) when seated against the mounting stud (61).

12. A filter assembly as claimed in claim 1, which includes a filter cap (23) comprising:
a canopy portion (41) that flares outward towards the open end of the cannister (21) and that includes windows (45) that form flow passages.
a ledge portion (43) extending radially outward from an upper end of the canopy portion (41) and forming a ledge for a portion (52) of the adaptor-mounting plate (24); and
a flange portion (44) that extends radially inward from an edge of the canopy portion (41) and captures the seal (39) that seals the interface between the outer chamber (13) and the inner chamber (14).

13. A spin-on filter cartridge for use with an adaptor in a filter assembly as claimed in claim 1, the filter cartridge comprising:
a canister (21) having an open end, a rim (31) surrounding this open end, and a seal (32) positioned in the rim for sealing an interface between the cartridge (20) and the hood (64),
a filter element (22) positioned within the canister (21), defining an outer chamber (13) outside the filter element (22) and having an inner chamber (14) inside the filter element (22), and a seal (39) that seals an interface between the outer chamber and the inner chamber when seated against the mounting stud (61), and
an adaptor-mounting plate (24) positioned within the canister (21) between its open end and the filter element (22), having a skirt portion forming an inner perimeter (53) defining a non-threaded central opening (54) and following a non-circular path.

14. A method of assembling a filter assembly as claimed in claim 1, which includes the step of spinning the fluid cartridge (20) relative to the mounting stud (61) of the adaptor (60), in which the adaptor (60) is in the stud-carrier-latched condition in which the carrier (62) remains stationary with the mounting stud (61) during initial spinning steps, and the adaptor (60) is converted to the stud-carrier-unlatched condition in which the carrier (62) rotates relative to the mounting stud (61) during latter spinning steps.

## Patentansprüche

1. Eine Filteranordnung mit einer Kappe (64), einem Adapter (60) und einer aufdrehbaren Filterkartusche (20), wobei die Kappe (64) ortsfest auf einer Befestigungsplattformfläche befestigt ist und der Adapter (60) umfasst:
einen Befestigungsstutzen (61), auf welchen die Filterkartusche (20) zur Installation aufgedreht wird, wobei der Befestigungsstutzen (61) ortsfest an der Befestigungsplattformfläche befestigt ist,
einen Träger (62), welcher an der Filterkartusche (20) anliegt und diese während Anfangsphasen des Drehens trägt, wobei der Träger (62) einen Schaftabschnitt (70) und einen Schürzenabschnitt (71) hat, der eine Mehrzahl von schneidenartigen Elementen (77) umfasst, und
eine Rastklinke (63), welche es dem Adapter (60) erlaubt, zwischen einem Zustand, in welchem der Träger (62) sich relativ zu einem Befestigungsstutzen (61) dreht, und einem Zustand zu wechseln, in welchem der Träger (62) bezogen auf den Befestigungsstutzen (61) ortsfest bleibt,
wobei der Befestigungsstutzen (61) innerhalb des Trägers (62) und die Rastklinke (63) um den Träger (62) herum angeordnet ist,
und wobei die Filterkartusche (20) aufweist:
einen Behälter (21) mit einem offenen Ende, mit einem dieses offene Ende umfassenden Rand (31) und mit einer Dichtung (32), die in dem Rand (31) angeordnet ist, um eine Nahtstelle zwischen der Kartusche (20) und der Kappe (64) abzudichten,
ein Filterelement (22), das innerhalb des Behälters (21) angeordnet ist, eine Außenkammer (13) außerhalb des Filterelements (22) definiert sowie eine Innenkammer (14) innerhalb des Filterelements (22) und eine Dichtung (39) hat, welche eine Nahtstelle zwischen der Außenkammer und der Innenkammer abdichtet, wenn sie an dem Befestigungsstutzen (61) anliegt, und
eine Adapterbefestigungsplatte (24), die im Behälter (21) zwischen dessen offenem Ende und dem Filterelement (22) angeordnet ist,
wobei die Adapterbefestigungsplatte (24) einen Schürzenabschnitt (50) aufweist, der einen Innenumfang (53) festlegt, welcher eine gewindelose Zentralöffnung (54) definiert und einem nicht kreisförmigen Pfad folgt, wobei die Mehrzahl der schneidenartigen Elemente (77) des Schürzenabschnitts (71) des Trägers während der Drehung der Filterkartusche (20) bezogen auf den Befestigungsstutzen (61) unter den Schürzenabschnitt (50) der Platte rutschen.

2. Eine Filteranordnung nach Anspruch 1, bei welcher die Mehrzahl von schneidenartigen Elementen (77) windradartig von dem Schaftabschnitt (70) abragt und bei welcher die Anzahl der schneidenartigen Elemente (77) dieselbe ist wie die Anzahl der Aufnahmeabschnitte (55) in der Adapterbefestigungsplatte (24).

3. Eine Filteranordnung nach Anspruch 2, bei welcher der Adapter (60) eine einen Anschluss definierende Kappe (64) umfasst.

4. Eine Filteranordnung nach Anspruch 1, bei welcher der Innenumfang (53) mindestens vier Aufnahmeabschnitte (55) und vier Rampenabschnitte (56) zwischen diesen hat, und vorzugsweise acht Aufnahmeabschnitte (55) und acht Rampenabschnitte (56) hat.

5. Eine Filteranordnung nach Anspruch 4, bei welcher der Schürzenabschnitt (50) zum offenen Ende des Behälters (51) hin abfällt.

6. Eine Filteranordnung nach Anspruch 5, bei welcher die Adapterbefestigungsplatte (24) einen Randabschnitt (51) aufweist, welcher den Außenumfang der Platte bildet.

7. Eine Filteranordnung nach Anspruch 6, bei welcher der Randabschnitt (51) an dem Rand (31) des Behälters (21) anliegt.

8. Eine Filteranordnung nach Anspruch 7, bei welcher die Adapterbefestigungsplatte (24) einen Knieabschnitt (52) aufweist, welcher den Schürzenabschnitt (50) und den Randabschnitt (51) verbindet, und bei welcher der Knieabschnitt (52) auf einem Schulterabschnitt (43) einer Filterkappe (23) aufliegt.

9. Eine Filteranordnung nach Anspruch 1, bei welcher mindestens eine der Dichtungen (32, 39) aus einem elastomeren Material hergestellt ist.

10. Eine Filteranordnung nach Anspruch 1, bei welcher das Filterelement (22) einen Boden (35), welcher eine Stirnseite des Filtermediums (33) abdichtet, und eine Feder (25, 26) für das Vorspannen des Filterelements (22) zum offenen Ende des Behälters (21) hin umfasst, bei welcher der Boden (35) eine Plattform für die Feder umfasst, in welcher die Feder oder Federn (25, 26) die Adapterbefestigungsplatte (24) zum offenen Ende des Behälters (21) hin vorspannen.

11. Eine Filteranordnung nach Anspruch 1, bei welcher das Filterelement eine Decke (37) zum Abdichten einer Stirnseite des Filtermediums (33) und zum Bilden eines Ablaufs (38) umfasst, welcher sich in die Innenkammer (14) erstreckt, wobei der Auslauf (38) die Dichtung (39) trägt, welche die Nahtstelle zwischen der Außenkammer (13) und der Innenkammer (14) abdichtet, wenn es am Befestigungsstutzen (61) anliegt.

12. Eine Filteranordnung nach Anspruch 1, welche eine Filterkappe (23) umfasst, die aufweist:
einen Abdeckabschnitt (41), der sich nach außen zum offenen Ende des Behälters (21) hin aufweitet und der Fenster (45) umfasst, welche Strömungsdurchgänge bilden,
einen Schulterabschnitt (43), welcher sich von einem oberen Ende des Abdeckabschnitts (41) radial nach außen erstreckt und eine Schulter für einen Abschnitt (52) der Adapterbefestigungsplatte (24) bildet; und
einen Flanschabschnitt (44), der sich radial nach innen von einer Kante des Abdeckabschnitts (41) erstreckt und die Dichtung (39) aufnimmt, welche die Nahtstelle zwischen der Außenkammer (13) und der Innenkammer (14) abdichtet.

13. Eine aufdrehbare Filterkartusche zur Verwendung mit einem Adapter in einer Filteranordnung nach Anspruch 1, wobei die Filterkartusche aufweist:
einen Behälter (21) mit einem offenen Ende, mit einem dieses offene Ende umgebenden Rand (31) und mit einer Dichtung (32), die in dem Rand angeordnet ist, um eine Nahtstelle zwischen der Kartusche (20) und der Kappe (64) abzudichten,
ein Filterelement (22), das innerhalb des Behälters (21) angeordnet ist, eine Außenkammer (13) außerhalb des Filterelements (22) definiert sowie eine Innenkammer (14) innerhalb des Filterelements (22) und eine Dichtung (39) hat, welche eine Nahtstelle zwischen der Außenkammer und der Innenkammer abdichtet, wenn sie an dem Befestigungsstutzen (61) anliegt, und
eine Adapterbefestigungsplatte (24), die im Behälter (21) zwischen dessen offenen Ende und dem Filterelement (22) angeordnet ist, welche einen Schürzenabschnitt hat, der einen Innenumfang (50) festlegt, welcher eine gewindelose Zentralöffnung (54) definiert und einem nicht kreisförmigen Pfad folgt.

14. Ein Verfahren zum Zusammenbauen einer Filteranordnung nach Anspruch 1, welches den Schritt umfasst, die Filterkartusche (20) bezogen auf den Befestigungsstutzen (61) des Adapters (60) zu drehen, wobei der Adapter (60) während anfänglicher Drehschritte im Stutzen-Träger-Verriegelungszustand ist, in welchem der Träger (62) mit dem Befestigungsstutzen (61) ortsfest bleibt, und der Adapter (60) während späterer Drehschritte in den Stutzen-Träger-Entriegelungszustand umgestellt wird, in welchem der Träger (62) sich bezogen auf den Befestigungsstutzen (61) dreht.

## Revendications

1. Ensemble de filtre comprenant un couvercle (64), un adaptateur (60) et une cartouche de filtre à visser (20), dans lequel le couvercle (64) est monté de manière fixe sur une surface d'une plateforme de montage, l'adaptateur (60) comprend :
un goujon de montage (61) sur lequel la cartouche de filtre (20) est vissée, pour l'installation, le goujon de montage (61) étant monté de manière fixe sur la surface de la plateforme de montage,
un support (62) qui se fixe sur la cartouche de filtre (20) et la supporte pendant les phases initiales de vissage, le support (62) ayant une partie de tige (70) et une partie de jupe (71) comprenant une pluralité d'éléments en forme de pale (77), et
un dispositif de verrouillage (63) qui permet à l'adaptateur (60) de passer d'une condition dans laquelle le support (62) tourne par rapport à un goujon de montage (61) à une condition dans laquelle le support (62) reste fixe par rapport au goujon de montage (61),
dans lequel le goujon de montage (61) est positionné à l'intérieur du support (62) et le dispositif de verrouillage (63) est positionné autour du support (62),
et dans lequel la cartouche de filtre (20) comprend :
une boîte (21) ayant une extrémité ouverte, un rebord (31) entourant cette extrémité ouverte, et un joint d'étanchéité (32) positionné dans le rebord (31) pour réaliser l'étanchéité d'une interface entre la cartouche (20) et le couvercle (64),
un élément de filtre (22) positionné à l'intérieur de la boîte (21), définissant une chambre externe (13) à l'extérieur de l'élément de filtre (22) et ayant une chambre interne (14) à l'intérieur de l'élément de filtre (22), et un joint d'étanchéité (39) qui réalise l'étanchéité d'une interface entre la chambre externe et la chambre interne, lorsqu'elles sont installées contre le goujon de montage (61), et
une plaque de montage d'adaptateur (24) positionnée à l'intérieur de la boîte (21) entre son extrémité ouverte et l'élément de filtre (22),
dans lequel la plaque de montage d'adaptateur (24) comprend une partie de jupe (50) formant un périmètre interne (53) définissant une ouverture centrale non filetée (54) et suivant une trajectoire non circulaire, la pluralité d'éléments en forme de pale (77) de la partie de jupe (71) du support coulissant au-dessous de la partie de jupe (50) de la plaque pendant la rotation de la cartouche de filtre (20) par rapport au goujon de montage (61).

2. Ensemble de filtre selon la revendication 1, dans lequel la pluralité d'éléments en forme de pale (77) font saillie à partir de la partie de tige (70) à la manière d'une vrille, et dans lequel le nombre d'élément en forme de pale (77) est le même que le nombre de sections de cavité (55) dans la plaque de montage d'adaptateur (24).

3. Ensemble de filtre selon la revendication 2, dans lequel l'adaptateur (60) comprend un couvercle définissant un orifice (64).

4. Ensemble de filtre selon la revendication 1, dans lequel le périmètre interne (53) a au moins quatre sections de cavité (55) et quatre sections de rampe (56) entre lesdites sections de cavité (55), et a de préférence huit sections de cavité (55) et huit sections de rampe (56).

5. Ensemble de filtre selon la revendication 4, dans lequel la partie de jupe (50) s'incline vers l'extrémité ouverte de la boîte (21).

6. Ensemble de filtre selon la revendication 5, dans lequel la plaque de montage d'adaptateur (24) comprend une partie de bord (51) qui forme la périphérie externe de la plaque.

7. Ensemble de filtre selon la revendication 6, dans lequel la partie de bord (51) est installée contre le rebord (31) de la boîte (21).

8. Ensemble de filtre selon la revendication 7, dans lequel la plaque de montage d'adaptateur (24) comprend une partie coudée (52) qui raccorde la partie de jupe (50) et la partie de bord (51), et dans lequel la partie de coude (52) repose sur une partie de rebord (43) d'un capuchon de filtre (23).

9. Ensemble de filtre selon la revendication 1, dans lequel au moins l'un des joints d'étanchéité (32, 39) est réalisé avec un matériau élastomère.

10. Ensemble de filtre selon la revendication 1, dans lequel l'élément de filtre (22) comprend un plancher (35) réalisant l'étanchéité d'une face de la couche filtrante (33) et un ressort (25, 26) pour solliciter l'élément de filtre (22) vers l'extrémité ouverte de la boîte (21), dans lequel le plancher (35) comprend une plateforme pour le ressort, dans lequel le (les) ressort(s) (25, 26) sollicite(nt) la plaque de montage d'adaptateur (24) vers l'extrémité ouverte de la boîte (21).

11. Ensemble de filtre selon la revendication 1, dans lequel l'élément de filtre comprend un plafond (37) pour réaliser l'étanchéité d'une face de la couche filtrante (33) et former une gouttière (38) s'étendant dans la chambre interne (14) dans laquelle la gouttière (38) maintient le joint d'étanchéité (39) qui réalise l'étanchéité de l'interface entre la chambre externe (13) et la chambre interne (14) lorsqu'elles sont installées contre le goujon de montage (61).

12. Ensemble de filtre selon la revendication 1, qui comprend un capuchon de filtre (23) comprenant :
une partie en surplomb (41) qui s'évase vers l'extérieur vers l'extrémité ouverte de la boîte (21) et qui comprend des fenêtres (45) qui forment des passages d'écoulement,
une partie de rebord (43) s'étendant radialement vers l'extérieur à partir d'une extrémité supérieure de la partie de boîte (41) et formant un rebord pour une partie (52) de la plaque de montage d'adaptateur (24) ; et
une partie de bride (44) qui s'étend radialement vers l'intérieur à partir d'un bord de la partie en surplomb (41) et capture le joint d'étanchéité (39) qui réalise l'étanchéité de l'interface entre la chambre externe (13) et la chambre interne (14).

13. Cartouche de filtre à visser destinée à être utilisée avec un adaptateur dans un ensemble de filtre selon la revendication 1, la cartouche de filtre comprenant :
une boîte (21) ayant une extrémité ouverte, un rebord (31) entourant cette extrémité ouverte, et un joint d'étanchéité (32) positionné dans le rebord pour réaliser l'étanchéité d'une interface entre la cartouche (20) et le couvercle (64),
un élément de filtre (22) positionné à l'intérieur de la boîte (21), définissant une chambre externe (13) à l'extérieur de l'élément de filtre (22) et ayant une chambre interne (14) à l'intérieur de l'élément de filtre (22), et un joint d'étanchéité (39) qui réalise l'étanchéité d'une interface entre la chambre externe et la chambre interne, lorsqu'elles sont installées contre le goujon de montage (61), et
une plaque de montage d'adaptateur (24) positionnée à l'intérieur de la boîte (21) entre son extrémité ouverte et l'élément de filtre (22), ayant une partie de jupe formant un périmètre interne (53) définissant une ouverte centrale non filetée (54) et suivant une trajectoire non circulaire.

14. Procédé pour assembler un ensemble de filtre selon la revendication 1, qui comprend l'étape consistant à visser la cartouche de filtre (20) par rapport au goujon de montage (61) de l'adaptateur (60), dans lequel l'adaptateur (60) est dans la condition verrouillée sur le support de goujon dans laquelle le support (62) reste fixe avec le goujon de montage (61) pendant les étapes de vissage initiales, et l'adaptateur (60) passe dans la condition déverrouillée du support de goujon dans laquelle le support (62) tourne par rapport au goujon de montage (61) pendant les dernières étapes de vissage.
